# FASCICULE DE BREVET EUROPEEN

(11) **EP 2 354 002 B1**
(45) Date de publication et mention de la délivrance du brevet: **23.05.2012**
(21) Numéro de dépôt: 11000067.6
(22) Date de dépôt: 06.01.2011
(51) Int. Cl.: B64D 37/20

(54) **Procédé et dispositif pour vidanger un réservoir, réservoir et aéronef muni d'un tel dispositif**
Verfahren und Vorrichtung zum Leeren eines Tanks, Tank und mit einer solchen Vorrichtung ausgestattetes Luftfahrzeug
Method and device for emptying a tank, tank and aircraft provided with such a device

(30) Priorité: 28.01.2010 FR 1000324
(43) Date de publication de la demande: 10.08.2011
(73) Titulaire: EUROCOPTER, 13725 Marignane Cédex (FR)
(72) Inventeur: Mougin, Stéphane, 13790 Rousset (FR)
(74) Mandataire: Pouillot, Laurent Pierre Paul

(56) Documents cités:
- US-A- 5 117 876
- US-A1- 2005 081 949
- US-A1- 2006 254 669

## Description

La présente invention concerne un procédé et un dispositif pour vidanger un réservoir, et notamment un réservoir de carburant d'un aéronef de type giravion. De plus, l'invention concerne un réservoir pourvu d'un tel dispositif, et un aéronef muni d'un tel réservoir.

Classiquement, un réservoir comporte un orifice dans sa partie inférieure, à savoir sa partie la plus proche du sol, obturé par une platine équipée dénommée « platine carburant » ou « fuel plate » en langue anglaise dans le cadre d'un réservoir de carburant.

Cette platine équipée comprend une platine en tant que telle ayant une ouverture recouverte par un organe dénommé « canister » par l'homme du métier.

Un tel réservoir est connu de US5117876, qui est considéré l'état de la technique le plus proche.

Il est à noter que dans la suite du texte et par commodité, en accord avec le vocabulaire utilisé par l'homme du métier, on entend par « platine » la platine en tant que telle et par « platine équipée » la platine pourvue de ces accessoires dont le canister mentionné précédemment.

Le canister comporte un carter externe débouchant sur un tuyau d'alimentation, assurant par exemple la liaison entre le réservoir et un moteur, une base du canister étant fixée à la platine. Cette base possède alors au moins un orifice de passage pour permettre le passage du liquide contenu dans le réservoir vers le tuyau d'alimentation.

De plus, la platine équipée comporte une pompe fixée à ladite platine, cette pompe traversant l'ouverture de la platine pour saillir à l'intérieur du carter. La pompe permet alors de faire circuler le liquide vers l'extérieur du réservoir en passant par le canister. On note que sur une platine équipée d'un réservoir de carburant, la pompe est usuellement dénommée « pompe de gavage ».

Pour éviter que le liquide s'échappe du réservoir par l'ouverture de la platine lorsqu'un opérateur démonte la pompe, le canister comporte un organe mobile, tel qu'un organe cylindrique coulissant élastiquement ou une valve par exemple, apte à obturer chaque orifice de passage en l'absence de la pompe.

Lorsque l'opérateur insère la pompe, cette pompe actionne l'organe mobile qui coulisse à l'intérieur du carter externe pour libérer chaque orifice de passage. A l'inverse, lorsque l'opérateur enlève la pompe, l'organe mobile retourne dans sa position d'origine, sous l'effet d'un ressort par exemple, et obture chaque orifice de passage.

En outre, la platine équipée comporte généralement un robinet de vidange rapide pour vidanger rapidement le réservoir, voire un moyen de purge réglementaire en point bas. Le robinet de vidange rapide est posé à demeure sur la platine.

Ainsi, le dispositif prévu pour vidanger le réservoir comporte un robinet agencé de manière permanente sur une platine. Plus précisément, ce dispositif comporte une platine équipée comprenant à minima un canister, une pompe et un robinet de vidange rapide.

On comprend donc que le robinet de vidange rapide alourdit de fait cette platine équipée alors qu'il est utilisé de manière ponctuelle uniquement. Cependant, dans le cadre d'un réservoir de carburant d'aéronef, les opérations de maintenance sont facilitées par la présence d'un moyen de vidange rapide. Sa suppression ne parait pas envisageable en l'état.

La présente invention a alors pour objet de proposer un procédé permettant de vidanger un réservoir sans faire appel à un robinet de vidange rapide disposé à demeure sur une platine.

Selon l'invention, un procédé pour vidanger un réservoir muni d'une platine présentant une face interne en regard de l'intérieur du réservoir et une face externe opposée à la face interne, la platine comportant un canister ayant un carter externe muni d'une base plaquée de manière étanche contre la platine indifféremment contre la face interne ou la face externe et qui délimite une ouverture de la platine, la base présentant au moins un orifice de passage apte à être obturé par un organe mobile du canister, la platine portant une pompe coopérant avec le canister en actionnant l'organe mobile pour libérer l'orifice de passage, est remarquable en ce que :
- on enlève la pompe du canister, puis
- on insère un connecteur hydraulique en lieu et place de la pompe, ce connecteur hydraulique coopérant avec le canister en actionnant l'organe mobile pour libérer l'orifice de passage afin de procéder à la vidange du réservoir via le connecteur hydraulique.

Ainsi, le carter externe du canister comporte au moins un orifice de passage obturé de manière réversible par un organe mobile, un organe cylindrique coulissant par exemple. Cet organe mobile autorise un démontage de la pompe lorsque le réservoir contient un liquide, pour des raisons de maintenance par exemple.

Selon l'invention, au lieu d'implémenter à demeure un robinet de vidange rapide sur la platine, on enlève la pompe et on la remplace par un équipement de vidange rapide apte à évacuer le liquide du réservoir à l'extérieur de ce réservoir. Cet équipement de vidange rapide est ainsi pourvu d'un connecteur hydraulique venant se positionner à la place de la pompe pour actionner l'organe mobile et libérer chaque orifice de passage. Le connecteur hydraulique délimitant un conduit, le liquide traverse l'orifice de passage et s'écoule par le connecteur hydraulique pour s'échapper du réservoir.

Contrairement aux préjugés existants, l'invention évite l'utilisation d'un robinet de vidange rapide monté de manière permanente sur une platine pour effectuer une vidange rapidement. De plus, l'invention est d'autant plus inventive que la vidange est réalisée via un canister, dont la fonction est au contraire d'éviter une telle vidange.

Par ailleurs, le connecteur hydraulique étant optionnellement relié à une vanne, suite à une insertion du connecteur hydraulique en lieu et place de la pompe, on ouvre la vanne pour évacuer le liquide du réservoir.

Cette caractéristique permet de réaliser la vidange au moment souhaité. La vanne peut prolonger le connecteur hydraulique ou encore être reliée à ce connecteur hydraulique par un tuyau d'évacuation par exemple.

Outre un procédé, l'invention a pour objet un dispositif de vidange, à savoir une platine équipée apte à vidanger un réservoir en appliquant le procédé décrit précédemment en ne nécessitant pas un robinet de vidange rapide fixé de manière permanente sur la platine.

Selon l'invention, un dispositif de vidange d'un réservoir est muni d'une platine présentant une face interne apte à être en regard de l'intérieur du réservoir et une face externe opposée à la face interne, la platine comportant un canister ayant un carter externe muni d'une base plaquée de manière étanche indifféremment contre la face interne ou contre la face externe et qui entoure une ouverture de la platine, la base présentant au moins un orifice de passage apte à être obturé par un organe mobile du canister, la platine portant une pompe amovible coopérant avec le canister en actionnant l'organe mobile pour libérer l'orifice de passage.

Ce dispositif comporte un connecteur hydraulique creux et amovible pouvant être agencé en lieu et place de la pompe pour coopérer avec ledit organe mobile.

Ainsi, la pompe est agencée à l'intérieur du canister en conditions normales à savoir en dehors d'actions de maintenance ou de vidange, le connecteur hydraulique étant agencé à l'intérieur du canister durant les vidanges.

Le dispositif peut de plus posséder une ou plusieurs des caractéristiques additionnelles qui suivent.

Par exemple, il comporte une vanne reliée hydrauliquement au connecteur hydraulique.

Selon une première réalisation, le connecteur hydraulique évacue le liquide contenu dans le réservoir sans moyen de contrôle. A l'inverse, selon une deuxième réalisation une vanne reliée au connecteur hydraulique représente un moyen de contrôle autorisant ou non l'évacuation du liquide contenu dans le réservoir, la vanne étant agencée en aval du connecteur hydraulique selon le sens d'écoulement du liquide.

En outre, le dispositif comporte un tuyau d'évacuation, relié indifféremment directement au connecteur hydraulique ou via une vanne interposée entre le tuyau d'évacuation et le connecteur hydraulique.

Ainsi, trois variantes sont éventuellement envisageables :
- le connecteur hydraulique est prolongé par une vanne débouchant sur une tuyauterie d'évacuation,
- le connecteur hydraulique est prolongé par une tuyauterie d'évacuation débouchant sur une vanne, ou encore,
- le connecteur hydraulique est prolongé par une tuyauterie d'évacuation débouchant sur l'extérieur ou sur un réceptacle dédié.

En effet, il est envisageable que le tuyau d'évacuation soit relié hydrauliquement à un moyen de fixation à un réceptacle de vidange.

On note que lorsque le connecteur hydraulique est prolongé par une tuyauterie d'évacuation débouchant sur une vanne, la tuyauterie d'évacuation peut être reliée au moyen de fixation par la vanne, cette vanne étant solidaire du moyen de fixation.

De plus, le connecteur hydraulique peut comporter un corps creux pourvu d'une arête supérieure apte à coopérer avec l'organe mobile quand ce connecteur hydraulique est engagé dans le canister, le corps comportant au moins une lumière en regard d'un orifice de passage lorsque le corps est inséré dans le canister.

Par exemple, l'arête supérieure est conformée à une arête inférieure de l'organe mobile, ou encore est en appui contre un rebord de l'organe mobile.

Par ailleurs, l'invention vise un réservoir muni du dispositif précédemment et un aéronef comportant un tel réservoir.

L'invention et ses avantages apparaîtront avec plus de détails dans le cadre de la description qui suit avec des exemples de réalisation donnés à titre illustratif en référence aux figures annexées qui représentent :
- les figures 1 et 2, une platine équipée selon l'état de la technique,
- la figure 3, un dispositif selon l'invention, et,
- les figures 4 à 6 des figures explicitant le procédé selon l'invention.

Les éléments présents dans plusieurs figures distinctes sont affectés d'une seule et même référence.

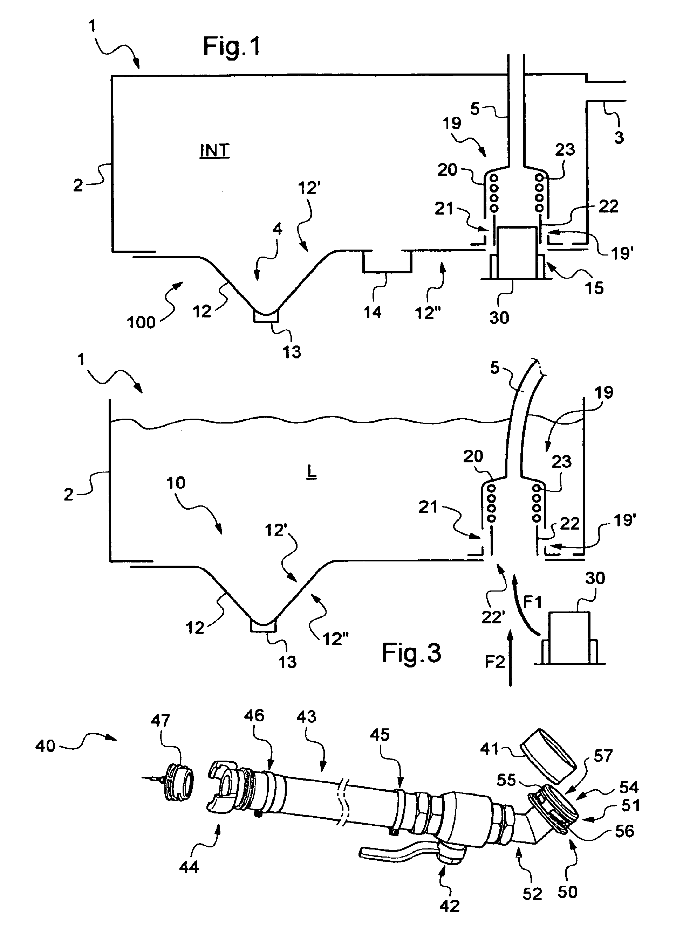

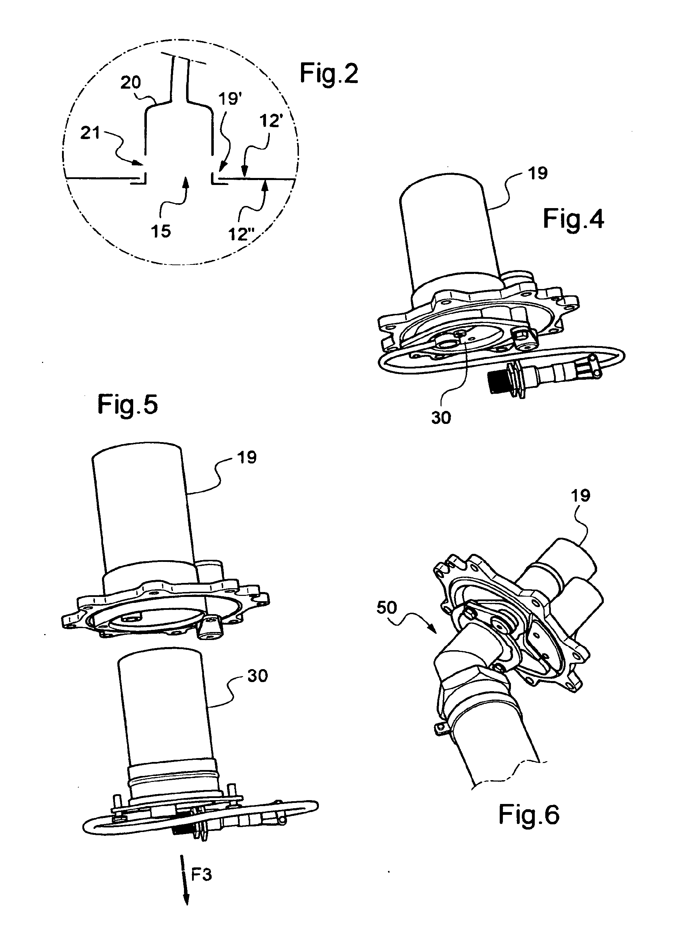

Les figures 1 et 2 présentent un aéronef 1 muni d'un réservoir 2, tel qu'un réservoir souple de carburant muni d'une mise à l'air libre 3 et d'un accès 4 vers l'intérieur INT du réservoir 2.

Cet accès 4 est obturé par un dispositif 100 selon l'état de la technique permettant notamment de vidanger le réservoir 2.

Ce dispositif 100 selon l'état de la technique est une platine équipée munie d'une platine 12 en tant que telle présentant une face interne 12' dirigée vers l'intérieur INT du réservoir 2, et une face externe 12" opposée à la face interne 12'.

De plus, la platine 12 présente d'une part un puisard incluant un moyen de purge 13, et d'autre part un robinet de vidange rapide 14.

Par ailleurs, la platine comporte une ouverture 15 par laquelle est inséré le cartouche d'une pompe 30, une pompe de gavage alimentant en carburant un moteur par exemple.

Pour permettre le démontage de la pompe 30 lorsque le réservoir 2 est rempli d'un liquide, le dispositif 100 comporte un canister 19 ayant un carter externe 20 dont la base 19' est fixée de manière étanche contre la platine 12 via des moyens usuels de type vis et joint par exemple. Le carter externe 20 est fixé à la face interne 12' de la platine selon la variante de la figure 1 alors que ce carter externe 20 est fixé à la face externe 12" de la platine selon la variante de la figure 2.

Cette base 19' délimite alors l'ouverture 15. De fait, la pompe 30 est insérée à l'intérieur du canister 19, et notamment du carter externe 20. De plus, la base 19' possède au moins un orifice de passage 21, le liquide du réservoir atteignant la pompe 30 via cet orifice de passage 21. Il est courant d'équiper l'orifice de passage 21 d'une crépine.

En outre, le canister 19 débouche sur un tuyau d'alimentation 5 sortant du réservoir 2. Lorsque la pompe 30 fonctionne, le liquide du réservoir entre dans le canister 19 puis est propulsé par la pompe 30 dans le tuyau d'alimentation 5 vers un moteur par exemple.

Enfin, le canister 19 présente un organe mobile 22 fixé à un organe élastique tel qu'un ressort 23 en appui sur le carter externe 20, à savoir un organe coulissant cylindrique sur les figures 1 et 2.

En l'absence de la pompe, l'organe élastique actionne l'organe mobile 22, par exemple contre une butée disposée sur la base 19' afin que cet organe mobile obture l'orifice de passage 21. Le liquide ne peut donc plus pénétrer à l'intérieur du canister 19, et ne risque pas de s'échapper du réservoir 2.

Lorsque la pompe 30 est insérée dans le canister 19, cette pompe 30 actionne l'organe mobile 22 qui libère l'orifice de passage 21. Par exemple, la pompe 30 pousse l'organe mobile 22.

Selon l'état de la technique, le canister 19 a donc pour fonction d'éviter une vidange du réservoir en l'absence de la pompe 30, cette vidange étant assurée par un robinet de vidange rapide 14 dédié qui est fixé de façon permanente à la platine 12. Un tel robinet de vidange rapide 14 engendre un surpoids inutile en dehors des phases de vidange.

La figure 3 présente une réalisation préférée d'un dispositif 10 selon l'invention pour notamment vidanger un liquide L contenu dans un réservoir 2, un réservoir 2 d'un aéronef 1 par exemple.

Ce dispositif 10 comporte un platine 12 pourvue d'une face interne 12' dirigée vers l'intérieur INT du réservoir 2, et une face externe 12" opposée à la face interne 12'.

De plus, la platine 12 schématisée présente de manière non obligatoire un puisard incluant un moyen de purge 13.

Par ailleurs, la platine 12 comporte une ouverture 15 traversant de part en part l'épaisseur de la platine, de la face interne 12' à la face externe 12" de cette platine. Le dispositif 10 comporte alors un canister 19 ayant un carter externe 20 dont la base 19' est fixée de manière étanche contre la face interne 12', via des moyens usuels de type vis et joint par exemple. Cette base 19' délimite et entoure alors l'ouverture 15. On comprend que la base du carter externe peut être fixée de manière étanche contre la face externe 12" de la platine 12, cette base traversant et délimitant l'ouverture 15 à l'instar de la représentation de la figure 2.

De plus, la base 19' possède au moins un orifice de passage 21, équipé éventuellement d'une crépine non représentée.

Enfin, le canister 19 présente un organe mobile 22, tel qu'un organe coulissant cylindrique, fixé à un organe élastique tel qu'un ressort 23 en appui sur le carter externe 20. L'organe élastique actionne l'organe mobile 22, par exemple en le poussant contre une butée disposée sur la base 19' afin que cet organe mobile obture chaque orifice de passage 21.

En outre, le dispositif 10 comporte une pompe 30, une pompe de gavage pour alimenter en carburant un moteur par exemple. Cette pompe 30 est amovible et apte à coopérer avec le canister 19, en étant insérée dans ce canister 19 selon la flèche F1. La pompe peut être fixée à la face externe 12" ou encore au canister 19.

On note que la pompe 30 actionne l'organe mobile 22 du canister 19 pour libérer chaque orifice de passage 21 du carter externe 20. Par exemple, la pompe 30 pousse l'organe mobile 22.

En outre, le canister 19 débouche sur un tuyau d'alimentation 5 sortant du réservoir 2. Lorsque la pompe 30 fonctionne, le liquide du réservoir entre dans le canister 19 puis est propulsé par la pompe 30 dans le tuyau d'alimentation 5 vers un moteur par exemple.

Contrairement à un dispositif 100 de vidange selon l'état de la technique, l'invention ne met pas en oeuvre un robinet de vidange rapide 14 fixé à demeure à la platine 12.

En effet, le dispositif 10 selon l'invention prévoit un équipement de vidange rapide 40 amovible, au travers duquel un liquide est à même de s'écouler, apte à être agencé en lieu et place de la pompe. Ainsi, on agence soit la pompe 30, soit l'équipement de vidange rapide 40 au sein du canister 19 en fonction du besoin.

Dès lors, on réalise la vidange au travers du canister 19, dont la fonction initiale est pourtant à l'opposé, et non pas en utilisant un robinet de vidange rapide 14.

Plus précisément, l'équipement 40 de vidange rapide comprend un connecteur hydraulique 50 pouvant coopérer avec l'organe mobile 22 du canister 19 afin de déboucher l'orifice de passage 21. Le connecteur hydraulique 50 définissant un conduit dirigé vers l'extérieur du réservoir, le liquide contenu dans ce réservoir pénètre dans le canister 19 puis s'en échappe via le connecteur hydraulique 50 de l'équipement de vidange rapide 40.

Le connecteur hydraulique 50 possède à sa première extrémité 51 un corps 54 creux sensiblement cylindrique pourvu d'une arête supérieure 57, et à sa deuxième extrémité 52 une portion coudée. Le corps 54 étant creux, ce corps 54 représente un conduit dans lequel un liquide peut circuler.

Cette arête circulaire est par exemple conformée à une arête inférieure 22' de l'organe mobile 22. Par exemple, l'arête inférieure 22' décrivant un cercle d'un diamètre donné, l'arête supérieure 57 décrit un cercle identique.

Lorsqu'un opérateur insère le connecter hydraulique 50 dans le canister 19, à l'instar de la pompe, le connecteur hydraulique actionne l'organe mobile 22 par son arête supérieure 57.

De plus, le corps 54 du connecteur hydraulique 50 comprend au moins une lumière 56 apte à être en regard d'un orifice de passage 21 quand le connecteur hydraulique est inséré dans le canister 19.

En outre, le corps 54 du connecteur hydraulique 50 peut être équipé de joints d'étanchéité 55 de part et d'autre de la lumière 56.

Enfin, ce corps peut posséder des moyens de fixation au canister 19 ou à la face externe 12" de la platine, telle qu'une vis par exemple.

Par ailleurs, l'équipement de vidange rapide 40 présente éventuellement une vanne 42 agencée en aval du connecteur hydraulique 50, selon le sens d'écoulement du liquide au travers de cet équipement de vidange rapide 40.

La vanne 42 est alors reliée hydrauliquement à la deuxième extrémité 52 du connecteur hydraulique 50, à savoir par un conduit ou encore directement conformément à la figure 3.

De surcroît, l'équipement de vidange rapide 40 est muni selon la variante représentée d'une tuyauterie d'évacuation 43 permettant de diriger le liquide du réservoir provenant du connecteur hydraulique vers un réceptacle de vidange, un camion citerne par exemple. Le tuyau d'évacuation représenté à une longueur relativement courte mais on comprend qu'il pourrait en être autrement sans sortir du cadre de l'invention.

Le tuyau d'évacuation 43 est relié hydrauliquement à la deuxième extrémité 52 du connecteur hydraulique 50. Selon la figure 3, le tuyau d'évacuation 43 est relié indirectement à la deuxième extrémité 52 du connecteur hydraulique 50 par la vanne 42 par un collier de serrage 45, mais pourrait être relié directement à la deuxième extrémité selon une autre variante.

Ce tuyau d'évacuation 43 est de plus relié à un moyen de fixation 44. Plus précisément, le tuyau d'évacuation 43 est fixé au moyen de fixation 44 par un collier de serrage 46. Le moyen de fixation 44 est d'un type usuel afin de permettre sa connexion à un embout classique, par exemple un embout disposé sur un camion citerne.

Enfin, lorsque l'équipement de vidange rapide 40 n'est pas utilisé, un opérateur dispose un premier bouchon 41 sur le corps 54 et un deuxième bouchon 47 sur le moyen de fixation 44.

Les figures 4 à 6 illustrent le procédé de vidange rapide du réservoir à l'aide de l'équipement de vidange rapide 40 de l'invention.

Conformément à la figure 4, avant la vidange, la pompe 30 est insérée dans le canister 19.

Ainsi, en référence à la figure 5, pour effectuer la vidange un opérateur enlève la pompe 30 selon la flèche F3. Dès lors, en référence à la figure 6, l'opérateur dispose l'équipement de vidange rapide en agençant le corps du connecteur hydraulique 50 en lieu et place de la pompe dans le canister 19.

Lorsque le dispositif 10 est muni d'un équipement de vidange rapide 40 comportant une vanne 42, l'opérateur ouvre alors la vanne 42 pour débuter la vidange.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour vidanger un réservoir (2) muni d'une platine (12) présentant une face interne (12') en regard de l'intérieur (INT) du réservoir (2) et une face externe (12") opposée à ladite face interne (12'), ladite platine (12) comportant un canister (19) ayant un carter externe (20) muni d'une base (19') plaquée de manière étanche contre la platine (12) et qui délimite une ouverture (15) de ladite platine (12), ladite base (19') présentant au moins un orifice de passage (21) apte à être obturé par un organe mobile (22) du canister (19), ladite platine (12) portant une pompe (30) coopérant avec ledit canister (19) en actionnant ledit organe mobile (22) pour libérer ledit orifice de passage (21),
**caractérisé en ce que** :
- on enlève la pompe (30) du canister (19), puis
- on insère un connecteur hydraulique (50) en lieu et place de la pompe (30), ce connecteur hydraulique (50) coopérant avec ledit canister (19) en actionnant ledit organe mobile (22) pour libérer ledit orifice de passage (21) afin de procéder à la vidange du réservoir (2) via ledit connecteur hydraulique (50).

2. Procédé selon la revendication 1,
**caractérisé en ce que** ledit connecteur hydraulique (50) étant relié à une vanne (42), suite à une insertion du connecteur hydraulique (50) en lieu et place de la pompe (30), on ouvre ladite vanne (42).

3. Dispositif (10) de vidange rapide d'un réservoir (2) apte à mettre en oeuvre le procédé selon l'une quelconque des revendications précédentes le dispositif étant muni d'une platine (12) présentant une face interne (12') apte à être en regard de l'intérieur (INT) du réservoir (2) et une face externe (12") opposée à ladite face interne (12'), ladite platine (12) comportant un canister (19) ayant un carter externe (20) muni d'une base (19') plaquée de manière étanche contre la platine (12) et qui délimite une ouverture (15) de ladite platine (12), ladite base (19') présentant au moins un orifice de passage (21) apte à être obturé par un organe mobile (22) du canister (19), ladite platine (12) portant une pompe (30) amovible coopérant avec ledit canister (19) en actionnant ledit organe mobile (22) pour libérer ledit orifice de passage (21),
**caractérisé en ce qu'**il comporte un connecteur hydraulique (50) creux et amovible pouvant être agencé en lieu et place de ladite pompe (30) pour coopérer avec ledit organe mobile (22).

4. Dispositif selon la revendication 3,
**caractérisé en ce qu'**il comporte une vanne (42) reliée hydrauliquement audit connecteur hydraulique (50).

5. Dispositif selon l'une quelconque des revendications 3 à 4,
**caractérisé en ce qu'**il comporte un tuyau d'évacuation (43), relié indifféremment directement audit connecteur hydraulique (50) ou via une vanne (42) interposée entre ledit tuyau d'évacuation (43) et ledit connecteur hydraulique (50).

6. Dispositif selon la revendication 5,
**caractérisé en ce que** ledit tuyau d'évacuation (43) est relié hydrauliquement via un moyen de fixation (44) à un réceptacle de vidange.

7. Dispositif selon l'une quelconque des revendications 3 à 7,
**caractérisé en ce que** ledit connecteur hydraulique (50) comporte un corps creux (54) pourvu d'une arête supérieure (57) apte à coopérer avec l'organe mobile (22), ledit corps (54) comportant au moins une lumière (56) en regard d'un orifice de passage (21) lorsque ledit corps (54) est inséré dans ledit canister (19).

8. Réservoir (2),
**caractérisé en ce qu'**il comporte un dispositif (10) selon l'une quelconque des revendications 3 à 7.

9. Aéronef (1),
**caractérisé en ce qu'**il comporte un réservoir selon la revendication 8.

## Claims

1. Method for draining a tank (2) provided with a plate (12) having an inside face (12') facing the inside (INT) of the tank (2) and an outside face (12") opposite said inside face (12'), said plate (12) including a canister (19) having an outer casing (20) provided with a base (19') that is pressed in a leaktight manner against the plate (12) and that defines an opening (15) in said plate (12), said base (19') having at least one through orifice (21) suitable for being closed by a movable member (22) of the canister (19), said plate (12) carrying a pump (30) that co-operates with said canister (19) by actuating said movable member (22) to open said through orifice (21),
**characterised in that**:
- the pump (30) is removed from the canister (19), and then
- a hydraulic connector (50) is inserted to take the place of the pump (30), the hydraulic connector (50) co-operating with said canister (19) by actuating said movable member (22) to open said through orifice (21) in order to proceed with draining the tank (2) via said hydraulic connector (50).

2. Method according to Claim 1,
**characterised in that** said hydraulic connector (50) is connected to a valve (42), and after the hydraulic connector (50) has been inserted to take the place of the pump (30), said valve (42) is opened.

3. Device (10) for quickly draining a tank (2) suitable for implementing the method according to either one of the preceding claims, the device being provided with a plate (12) having an inside face (12') suitable for facing the inside (INT) of the tank (2) and an outside face (12") opposite said inside face (12'), said plate (12) including a canister (19) having an outer casing (20) provided with a base (19') that is pressed in a leaktight manner against the plate (12) and that defines an opening (15) in said plate (12), said base (19') having at least one through orifice (21) suitable for being closed by a movable member (22) of the canister (19), said plate (12) carrying a removable pump (30) that co-operates with said canister (19) by actuating said movable member (22) to open said through orifice (21),
**characterised in that** it includes a hollow and removable hydraulic connector (50) capable of being arranged to take the place of said pump (30) in order to co-operate with said movable member (22).

4. Device according to Claim 3,
**characterised in that** it includes a valve (42) hydraulically connected to said hydraulic connector (50).

5. Device according to either one of Claims 3 to 4,
**characterised in that** it includes a discharge pipe (43) connected to said hydraulic connector (50) either directly or via a valve (42) interposed between said discharge pipe (43) and said hydraulic connector (50).

6. Device according to Claim 5,
**characterised in that** said discharge pipe (43) is hydraulically connected via a fastening means (44) to a drain container.

7. Device according to according to any one of Claims 3 to 7,
**characterised in that** said hydraulic connector (50) includes a hollow body (54) provided with a top edge (57) suitable for co-operating with the movable member (22), said body (54) including at least one slot (56) facing a through orifice (21) when said body (54) is inserted in said canister (19).

8. Tank (2),
**characterised in that** it includes a device (10) according to any one of Claims 3 to 7.

9. Aircraft (1),
**characterised in that** it includes a tank according to Claim 8.

## Patentansprüche

1. Verfahren zum Leeren eines Tanks (2) mit einer Platte (12), die eine dem Inneren (INT) des Tanks (2) zugewandte Innenseite (12') und eine der Innenseite (12') gegenüberliegende Außenseite (12") aufweist, wobei die Platte (12) einen Behälter (19) aufweist mit einem äußeren Gehäuse (20), welches mit einem Sockel (19') versehen ist, der dicht gegen die Platte (12) angepresst ist und eine Öffnung (15) der Platte (12) eingrenzt, wobei der Sockel (19') mindestens eine Durchgangsöffnung (21) aufweist, die mit einem beweglichen Organ (22) des Behälters (19) verschlossen werden kann, wobei die Platte (12) eine Pumpe (30) trägt, die mit dem Behälter (19) zusammenwirkt, um das mobile Organ (22) zu betätigen, um die Durchgangsöffnung (21) freizugeben,
**dadurch gekennzeichnet, dass**
- man die Pumpe (30) des Behälters (19) entfernt und
- man dann einen Hydraulikverbinder (50) anstelle der Pumpe (30) ein%gt, wobei der Hydraulikverbinder (50) mit dem Behälter (19) zusammenwirkt, indem er das bewegliche Organ (22) betätigt, um die Durchgangsöffhung (21) freizugeben, um die Leerung des Tanks (2) über den Hydraulikverbinder (50) durchzuführen.

2. Verfahren nach Anspruch 1,
**dadurch gekennzeichnet, dass** der Hydraulikverbinder (50) mit einem Ventil (42) verbunden ist, das nach der Einfügung des Hydraulikverbinders (50) anstelle der Pumpe (30) geöffnet wird.

3. Vorrichtung (10) zur Schnellentleerung eines Tanks (2), welche zur Durchführung des Verfahrens nach einem der vorstehenden Ansprüche geeignet ist, wobei die Vorrichtung mit einer Platte (12) versehen ist, die eine Innenseite (12') aufweist, die dem Inneren (INT) des Tanks (2) zugewandt sein kann, und eine Außenseite (12") gegenüber der Innenseite (12'), wobei die Platte (12) einen Behälter (19) mit einem äußeren Gehäuse (20) aufweist, welches mit einem Sockel (19') versehen ist, welcher dicht gegen die Platte (12) angepresst ist und der eine Öffnung (15) der Platte (12) eingrenzt, wobei der Sockel (19') mindestens eine Durchgangsöffnung (21) aufweist, die durch ein bewegliches Organ (22) des Behälters (19) verschlossen werden kann, wobei die Platte (12) eine abnehmbare Pumpe (30) trägt, die mit dem Behälter (19) zusammenwirkt, indem sie das bewegliche Organ (22) betätigt, um die Durchgangsöffnung (21) freizugeben,
**dadurch gekennzeichnet, dass** sie einen hydraulischen Verbinder (50) aufweist, der hohl und abnehmbar ist und anstatt der Pumpe (30) eingebaut werden kann, um mit dem beweglichen Organ (22) zusammenzuwirken.

4. Vorrichtung nach Anspruch 3,
**gekennzeichnet durch** ein hydraulisch mit dem hydraulischen Verbinder (50) verbundenes Ventil (42).

5. Vorrichtung nach einem der Ansprüche 3 oder 4,
**gekennzeichnet durch** ein Abflussrohr (43), welches gleichermaßen direkt am Hydraulikverbinder (50) oder über ein zwischen dem Abflussrohr (43) und dem Hydraulikverbinder (50) angeordnetes Ventil angeschlossen ist.

6. Vorrichtung nach Anspruch 5,
**dadurch gekennzeichnet, dass** das Abflussrohr (43) hydraulisch über ein Befestigungsmittel (44) mit einem Entleerungsbehälter verbunden ist.

7. Vorrichtung nach einem der Ansprüche 3 bis 7,
**dadurch gekennzeichnet, dass** der hydraulische Verbinder (50) einen Hohlkörper (54) aufweist, der mit einer oberen Kante (57) versehen ist, die mit dem beweglichen Organ (2) zusammenwirken kann, wobei der Körper (54) mindestens eine Ausnehmung (56) gegenüber einer Durchgangsöffnung (21) aufweist, wenn der Körper (54) in den Behälter (19) eingefügt ist.

8. Tank (2),
**gekennzeichnet durch** eine Vorrichtung (10) nach einem der Ansprüche 3 bis 7.

9. Luftfahrzeug (1),
**gekennzeichnet durch** einen Tank nach Anspruch 8.
